# EUROPÄISCHE PATENTSCHRIFT

(11) **EP 0 576 822 B1**
(45) Veröffentlichungstag und Bekanntmachung des Hinweises auf die Patenterteilung: **20.11.1996**
(21) Anmeldenummer: 93108134.3
(22) Anmeldetag: 19.05.1993
(51) Int. Cl.: H02B 1/20, B60R 16/02

(54) **Modular Schaltelementblock**
Modular mounting block for circuit elements
Bloc de montage modulaire pour éléments de circuit

(30) Priorität: 03.07.1992 DE 4221898
(43) Veröffentlichungstag der Anmeldung: 05.01.1994
(73) Patentinhaber: MERCEDES-BENZ AG, 70327 Stuttgart (DE)
(72) Erfinder: Krieg, Karl-Heinz, Dipl.-Ing., W-7333 Ebersbach (DE); Klink, Siegfried, W-7036 Schönaich (DE); Manzke, Uwe, W-7252 Weil der Stadt - 3 (DE); Schulcz, Michael, Dipl.-Ing., W-7030 Böblingen (DE)

(56) Entgegenhaltungen:
- DE-A- 3 331 616
- DE-A- 3 903 818

## Beschreibung

Die Erfindung bezieht sich auf einen modularen Schaltelementblock mit den Merkmalen des Oberbegriffs des Patentanspruchs 1.

Es ist bereits ein gattungsgemäßer Schaltelementblock bekannt, DE-A-39 03 818, welcher aus einem Gehäuse mit Anschlußverbindern und daran befestigten Kabelbäumen und einem als Grundkörpermodul zu betrachtenden Basisschaltkreisblock mit Schaltelementen (Relais, Sicherungen) und Anschlußklemmen besteht. In der Standardausstattung ist lediglich der Basisschaltkreisblock über seine Anschlußklemmen mit den Anschlußverbindern des Gehäuses kontaktiert. In einer erweiterten Ausbauausstattung des Schaltelementblocks sind in das Gehäuse noch als weitere Grundkörpermodule zu betrachtende Optionalschaltkreisblöcke eingesetzt, deren Verbinder (feminine Buchsenteile) mit Verbindern (maskuline Steckerteile) des Basisschaltkreisblockes kontaktiert werden. Das Gehäuse ist hierbei aber für alle denkbaren Ausstattungszusammenstellungen der Schaltkreisblöcke gleich groß ausgeführt.

Es ist auch ein aus mehreren Einzelmodulen puzzleartig zusammensetzbarer Stromverteiler für die Verdrahtung von Kraftfahrzeugen bekannt (DE 33 34 097 C1), bei dem eine erste Gruppe von Modulen in einen Grundkasten eingesetzt werden und weitere Module auf diese erste Gruppe aufgesetzt und gleichzeitig elektrisch gebrückt werden können. Auch hierbei ist der Grundkasten für alle denkbaren Zusammenstellungen der Module gleich groß ausgeführt.

Ferner ist ein modularer Schaltelementblock bekannt (DE 8034702 U1), welcher für jeweils komplett in Einzelgehäusen zusammengefaßte Schalter als Schaltelemente vorgesehen ist, die ihrerseits Außenkontakte aufweisen, die beim Einstecken der Schalter in Steckplätze eines mit einer Leiterplatte versehenen Grundkörpers mit Leiterbahnen der Leiterplatte elektrisch kontaktiert werden. Die Leiterplatte selbst wiederum ist über einen Mehrfachstecker an ein Fahrzeugbordnetz anschließbar.

Ein vergleichbarer Schaltelementblock ist auch aus der DE 37 28 756 C1 bekannt. Dessen Grundkörper umfaßt die Festkontakte von Schaltern sowie leitende Verbindungen zwischen den einzelnen Schaltelementen in Gestalt von Leiterbahnen, während die Schaltkontakte der Schalter mitsamt den zugeordneten Betätigungstasten in vorgegebene Steckplätze des Grundkörpers einsetzbar sind. Die Leiterbahnen erübrigen eine Einzelkontaktierung der wahlweise einsetzbaren Schalter. Der gesamte Schaltelementblock ist über einen zentralen Mehrfachstecker an einen Kabelbaum (insbesondere eines Fahrzeug-Bordnetzes) anschließbar.

Bei beiden letztgenannten bekannten Anordnungen ist zwar eine weitgehend wahlfreie Bestückung des Grundkörpers mit Schaltelementen möglich,jedoch ist eine Höchstanzahl durch die Steckplätze des Grundkörpers fest vorgegeben.

Schließlich offenbart die DE 32 30 412 C2 eine Vorrichtung für elektrische Geräte zur äußeren Eingabe und/oder Anzeige von Informationen, bei der Schalt- und/oder Anzeigeelemente je nach Bedarf miteinander kombiniert auf einem oder mehreren Sockeln in einem gemeinsamen Montagerahmen angeordnet werden können.

Bei aufgrund einer breiten, durch Kunden frei wählbaren Palette von Fahrzeug-Ausstattungen stark variierenden Anzahl von Schaltelementen kann es aus Kosten- und Platzgründen unerwünscht sein, auch für eine verhältnismäßig geringe Anzahl von zu steckenden Schaltelementen immer die maximale Anzahl von Steckplätzen in einem Grundkörper bereitstellen zu müssen (z.B. maximal 9 Steckplätze bei einer Serien- oder Standardausstattung eines Fahrzeugs mit 4 Schaltelementen).

Die Erfindung hat deshalb die Aufgabe, bei einem gattungsgemäßen modularen Schaltelementblock die Variabilität der Steckplatzanzahl zu vergrößern.

Diese Aufgabe wird mit den kennzeichnenden Merkmalen des Patentanspruchs 1 erfindungsgemäß gelöst.
Es werden nun nicht mehr nur die Schaltelemente selbst als Module betrachtet, sondern auch der Grundkörper wird aufgeteilt in mehrere Module mit einer Anzahl von Steckplätzen, die je nach Bedarf an Steckplätzen ineinandergesteckt und ggf. beim Stecken elektrisch miteinander kontaktiert werden.

Die kennzeichnenden Merkmale der Unteransprüche geben vorteilhafte Weiterbildungen des erfindungsgemäßen Schaltelementblocks an.

Die Grundkörpermodule sind vorzugsweise so ausgebildet, daß ihre Steckplätze nach dem Ineinanderfügen der Module in einer geraden Reihe liegen; handelt es sich bei den Schaltelementen um elektrische Schalter mit Bedientasten, so können letztere z. B. durch je nach Anzahl der Schaltelemente vorgesehene Ausnehmungen in einer Cockpitverkleidung gesteckt werden und bieten dann dem Fahrzeugbenutzer ein harmonisches Gesamtbild.

Ein weiterer Vorteil der Aufteilung des Grundkörpers in Module ist es, daß mindestens ein Modul ein elektronisches Steuergerät umfassen kann, das mit den einsteckbaren Schaltelementen elektrisch verbunden ist. Vorzugsweise bildet dieser für eine Sonderausstattung verfügbare Modul die Endausbaustufe des Schaltelementblocks und hat auch seinerseits eine Steckaufnahme für einen kleineren Grundkörpermodul.

Weitere Einzelheiten und Vorteile gehen aus der Zeichnung eines Ausführungsbeispiels und deren sich hier anschließender eingehender Beschreibung hervor.

Es zeigen
- Figur 1: einen in mehrere Grundkörpermodule mit Steckplätzen aufgeteilten Schaltelementblock in teilweise demontierter Zusammenstellung,
- Figur 2: eine aufgeschnittene Seitenansicht des Schaltelementblocks mit zwei ineinandergesteckten Grundkörpermodulen.

Ein Schaltelementblock SB umfaßt einen ersten Grundkörpermodul 1 mit vier hier nicht näher dargestellten Steckplätzen 2 für Schaltelemente 3.1. Drei davon sind hier als elektrische Wippenschalter zur Steuerung von Fahrzeugfunktionen wie Scheibenwischer, Gurtbringer, Zentralverriegelung etc. ausgebildet, während der vierte ein durch die Dreiecksform seiner Drucktaste gekennzeichneter Warnblinkerschalter ist.
Diese Anzahl von Schaltelementen 3.1 bildet eine Serien- oder Standardausstattung aller Fahrzeuge eines Typs, wobei noch unterschiedliche Funktionsbelegungen der Steckplätze 2 wählbar sind.
Gleichwohl kann innerhalb des ersten Grundkörpermoduls 1 eine gemeinsame Verkabelung der Schaltelemente 3.1 vorgesehen werden, die zu einer beträchlichen Reduzierung der Anzahl der von außen zuzuführenden Leitungen beiträgt.
Der erste Grundkörpermodul 1 wird hinter einer Cockpitverkleidung montiert, die mit Funktionssymbolen versehenen Bedientasten der Schaltelemente werden dabei als einzige für den Fahrzeugbenutzer sichtbare Bauteile des Schaltelementblocks durch Ausnehmungen dieser Verkleidung durchgesteckt und liegen dann in einer geraden Reihe.

Für häufig vorkommende Ausstattungssonderwünsche kann die Anzahl von Steckplätzen 2 für weitere, hier aus den Steckplätzen 2 herausgenommene Schaltelemente 3.2 in einer ersten Ausbaustufe in einfacher Weise um drei erhöht werden, indem ein zweiter Grundkörpermodul 4 mit diesen drei zusätzlichen Steckplätzen hinzugefügt wird. Eine Steckaufnahme 5 des zweiten Moduls 4 ist so bemessen, daß der erste Grundkörpermodul 1 darin einsetzbar ist und danach alle Steckplätze 2 wiederum in einer geraden Reihe liegen. Gleiches gilt natürlich für die Bedientasten der Schaltelemente 3.1 und 3.2.

Für einen noch weiteren Ausbau der Anzahl der Steckplätze 2 steht schließlich ein dritter Grundkörpermodul 6 zur Verfügung, der neben zwei zusätzlichen, mit als Wippenschaltern ausgebildeten Schaltelementen 3.3 bestückten Steckplätzen 2' wiederum eine Steckaufnahme 5 für den ersten Grundkörpermodul 1 sowie drei den Steckplätzen 2 des zweiten Grundkörpermoduls 4 entsprechende Steckplätze 2 für die (fakultativ steckbaren) Schaltelemente 3.2 umfaßt.

Es wäre natürlich auch denkbar, den zweiten und den darin stekkenden ersten Grundkörpermodul gemeinsam in den dritten Modul 6 einzusetzen, dessen Steckaufnahme 5 dann für die Aufnahme des zweiten Moduls 4 ausgebildet sein müßte. Dafür könnten die drei Steckplätze 2 im dritten Modul 6 weggelassen werden.
Eine solche Gestaltung würde jedoch in der Bauteiltiefe (in Richtung der Einsteckrichtung) mehr auftragen als die hier gewählte.

Ein wesentlicher Vorteil dieser Anordnung ist, daß nicht in jedem Fahrzeug die Maximalanzahl von Steckplätzen für Schaltelemente als Vorleistung in einem einheitlichen Grundkörper enthalten sein muß.

Der dritte Grundkörpermodul 6 bietet innerhalb seines Volumens auch Platz für die Unterbringung eines mit den gesteckten Schaltelementen 3.3 elektrisch zu verbindenden elektronischen Steuergeräts 7, das hier nur gestrichelt angedeutet ist. Beispielsweise kann es sich dabei um ein Steuergerät für die Leistung einer Sitzheizungsanlage handeln, die mittels der Schaltelemente 3.3 in mehreren Stufen ein- und wieder abschaltbar ist.

Die Steckplätze 2 können unter sich alle identisch ausgeführt sein, oder es können unterschiedliche Steckplatzformen vorgesehen werden, um bestimmte Funktionsbelegungen eindeutig vorzugeben. Ggf. können mechanische Formcodierungen in an sich bekannter Weise Verwechslungen bei der Schaltelementmontage ausschließen.
In diesem Sinne sind z. B. die Steckplätze 2' in dem dritten Grundkörpermodul 6 geringfügig kleiner als die Steckplätze 2; die hier einzusetzenden Schalter 3.3 sind nicht für Leistungsströme, sondern nur für Steuerströme des Steuergeräts 7 ausgelegt. Ungeachtet dessen sind ihre Bedientasten aus stilistischen und ergonomischen Gründen gleich groß wie die der anderen Schalter.

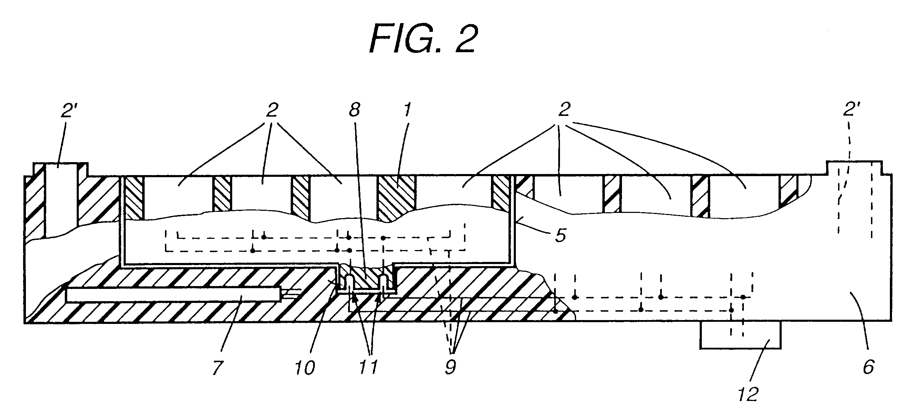

Die Schnittansicht des Schaltelementblocks SB gemäß **Figur 2** zeigt, wie der erste Grundkörpermodul 1 in die Steckaufnahme 5 des dritten Moduls 6 eingesetzt ist, und auch die Anordnung der Steckplätze 2 und 2' in einer geraden Reihe. Die Schaltelemente 3.1 etc. sind hier fortgelassen.

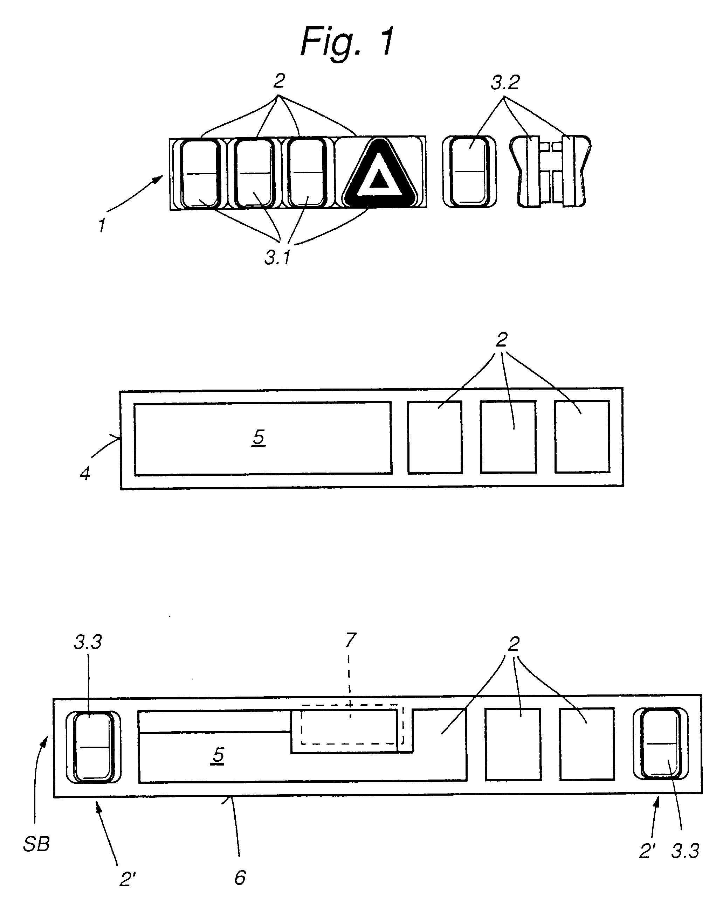

Ferner weist der erste Grundkörpermodul 1 einen elektrischen Außenanschluß 8 für zwei in dem Grundkörpermodul verlaufenden elektrische Leiter 9 auf, die in an sich bekannter und daher nicht weiter dargestellter Weise Kontaktflächen zu jedem Steckplatz 2 aufweisen. Diese Kontaktflächen werden beim Einstecken der Schaltelemente 3.1 in die Steckplätze 2 mit entsprechenden Außenanschlüssen der Schaltelemente 3.1 kontaktiert, so daß die Leiter 9 für alle Schaltelemente 3.1 gemeinsam genutzt werden können.
Sie können z. B. Plus und Masse für die Beleuchtung der Schaltelemente bzw. deren Drucktasten bei eingeschalteter Fahrzeugbeleuchtung zentral zuführen, was den Verkabelungsaufwand bei steigender Anzahl von zu steckenden Schaltelementen deutlich verringert.
Auch die anderen elektrischen Verbindungen für die Schaltelemente 3.1 in dem ersten Grundkörpermodul 1 können auf diese Weise zentral übergeleitet werden, was hier aus Vereinfachungsgründen nicht dargestellt ist.
Wenn die Steckplätze 2 - wie in Figur 1 dargestellt - nach unten offen sind, so können die Schaltelemente 3.1 und 3.2 im weiteren auch einzeln verkabelt werden, was der bereits erwähnten variablen Funktionsbelegung der Steckplätze 2 entgegenkommt.

In der den ersten Modul 1 aufnehmenden Steckaufnahme 5 des dritten Grundkörpermoduls 6 ist ein mit dem Außenanschluß 8 korrespondierender Steckanschluß 10 vorgesehen, so daß beim Einsetzen des ersten Moduls in den dritten Modul gleichzeitig eine elektrische Steck-verbindung der zu überführenden elektrischen Leiter gefügt wird, wie durch entsprechende Symbole für eine Kupplung 11 angedeutet ist.
Durch mechanische Formcodierung wird Falschmontage ausgeschlossen, d. h. der erste Grundkörpermodul 1 läßt sich nur in der richtigen Stellung in die Steckaufnahme 5 des zweiten oder des dritten Moduls einsetzen.
Schließlich ist nochmals schematisch die Anordnung des Steuergeräts 7 nebst nur abschnittweise sichtbaren Zuleitungen in dem dritten Grundkörpermodul 6 angedeutet, und ist auch dieser mit einem Außenanschluß 12 zu seiner Verbindung mit dem elektrischen Fahrzeug-Bordnetz versehen.

Es sei angemerkt, daß natürlich die Steckaufnahme 5 des zweiten Grundkörpermoduls 4 einen entsprechenden Steckanschluß 9 zur Aufnahme des Außenanschlusses 7 des ersten Grundkörpermoduls 1 aufweist, was hier nicht näher dargestellt wird.

Um eine Schnittansicht nur des zweiten Grundkörpermoduls 4 mit dem eingesteckten ersten Modul 1 darzustellen, wären in Figur 2 lediglich die beiden Steckplätze 2' rechts und links und das Steuergerät 7 wegzulassen.

## Patentansprüche

1. Modularer Schaltelementblock (SB)
mit einem Grundkörpermodul (1) mit einer zur Aufnahme einer einer Standardausstattung von Schaltelementen (3.1) - insbesondere von elektrischen Schaltern - entsprechenden Anzahl von Steckplätzen (2)
und mit für weitere Ausbaustufen mindestens einem weiteren Grundkörpermodul (4;6) mit einer Anzahl von zusätzlichen Steckplätzen (2;2') für weitere Schaltelemente (3.2;3.3)und mit einer Steckaufnahme (5) zur Verbindung mit einem Grundkörpermodul (1;4),
**dadurch gekennzeichnet**,
daß die Steckaufnahme (5) des weiteren Grundkörpermoduls (4;6) so bemessen ist, daß in diese wiederum ein kleinerer Grundkörpermodul (1;4) einsetzbar ist.

2. Schaltelementblock nach Anspruch 1,
**dadurch gekennzeichnet,**
daß die Steckplätze (2) für die Schaltelemente (3.1, 3.-2, 3.3) bei ineinandergefügten Grundkörpermodulen (1, 4, 6) in einer geraden Reihe liegen.

3. Schaltelementblock nach Anspruch 1 oder 2,
**dadurch gekennzeichnet,**
daß mindestens einer der Grundkörpermodule neben Steckplätzen (2, 2') für Schaltelemente (3.3) ein mit den gesteckten Schaltelementen verbundenes Steuergerät (7) zur Leistungssteuerung von elektrischen, den Schaltelementen (3.3) zugeordneten Verbrauchern umfaßt.

4. Schaltelementblock nach Anspruch 3,
**dadurch gekennzeichnet,**
daß der mit dem Steuergerät (7) versehene Grundkörpermodul (6) ebenfalls eine Steckaufnahme (5) zum Einsetzen eines kleineren Grundkörpermoduls (1;4) umfaßt.

5. Schaltelementblock nach einem der vorstehenden Ansprüche,
**dadurch gekennzeichnet,**
daß mindestens ein elektrischer Leiter (9) innerhalb eines Grundkörpermoduls zur gemeinsamen elektrischen Kontaktierung mehrerer steckbarer Schaltelemente vorgesehen ist,
daß jeder mit einem solchen gemeinsamen elektrischen Leiter versehene, in eine Steckaufnahme (5) eines anderen Grundkörpermoduls einsteckbare Grundkörpermodul einen Außenanschluß (8) zur Überleitung des mindestens einen gemeinsamen elektrischen Leiters (9) zwischen den Modulen umfaßt und
daß die entsprechende Steckaufnahme (5) einen elektrischen Steckanschluß (10) mit Kupplungsmitteln (11) zur Aufnahme und elektrischen Kontaktierung des besagten Außenanschlusses (8) aufweist.

## Claims

1. Modular switching-element block (SB) having a base-body module (1) with an appropriate number of plug-in locations (2) for accommodation of a standard fit of switching elements (3.1) - in particular of electrical switches - and having, for further extension stages, at least one further base-body module (4;6) with a number of additional plug-in locations (2;2') for further switching elements (3.2;3.3) and having a plug holder (5) for connection to a base-body module (1;4), characterised in that the plug holder (5) of the further base-body module (4;6) is of such dimensions that a smaller base-body module (1;4) can in turn be inserted into it.

2. Switching-element block according to Claim 1, characterised in that the plug-in locations (2) for the switching elements (3.1, 3.2, 3.3) lie in a straight line when the base-body modules (1, 4, 6) are joined to one another.

3. Switching-element block according to Claim 1 or 2, characterised in that, in addition to plug-in locations (2, 2') for switching elements (3.3), at least one of the base-body modules comprises a controller (7), which is connected to the plugged-in switching elements, for power control of electrical loads which are allocated to the switching elements (3.3).

4. Switching-element block according to Claim 3, characterised in that the base-body module (6) which is provided with the controller (7) likewise comprises a plug holder (5) for the insertion of a smaller base-body module (1;4).

5. Switching-element block according to one of the preceding claims, characterised in that at least one electrical conductor (9) is provided inside a base-body module, for making common electrical contact with a plurality of plug-in switching elements, in that each base-body module which is provided with such a common electrical conductor and can be inserted into a plug holder (5) in another base-body module comprises an external connection (8) for passing the at least one common electrical conductor (9) over between the modules, and in that the corresponding plug holder (5) has an electrical plug connection (10) with coupling means (11) for holding and making electrical contact with the said external connection (8).

## Revendications

1. Bloc modulaire pour éléments de commutation (SB), comportant
un module formant corps de base (1) comportant un nombre d'emplacements d'enfichage (2), qui correspond à la réception d'un équipement standard formé d'éléments de commutation (3.1) - notamment d'interrupteurs électriques -, et au moins un autre module formant corps de base (4;6) prévu pour d'autres étapes de montage et comportant un nombre d'emplacements supplémentaires d'enfichage (2;2') pour d'autres éléments de commutation (3.2, 3.3) et un logement à enfichage (5) pour la liaison avec un module formant corps de base (1;4),
caractérisé en ce
que le logement à enfichage (5) de l'autre module formant corps de base (4;6) est dimensionné de telle sorte qu'à nou,veau un corps formant module de base plus petit (1;4) peut être inséré dans ce logement.

2. Bloc pour éléments de commutation selon la revendication 1,
caractérisé en ce que les emplacements d'affichage (2) pour les éléments de commutation (3.1, 3.2, 3.3) sont disposés suivant une rangée rectiligne, lorsque les modules formant corps de base (1,4,6) sont insérés les uns dans les autres.

3. Bloc pour éléments de commutation selon la revendication 1 ou 2,
caractérisé en ce qu'au moins l'un des modules formant corps de base comprend, en dehors d'emplacements d'enfichage (2,2') pour des éléments de commutation (3.3), un appareil de commande (7) relié aux éléments de commutation enfichés pour commander la puissance d'appareils électriques d'utilisation, qui sont associés aux éléments de commutation (3.3).

4. Bloc pour éléments de commutation selon la revendication 3, caractérisé en ce
que le module formant corps de base (6) équipé de l'appareil de commande (7) comprend également un logement à enfichage (5) pour l'insertion d'un module formant corps de base (1;4) plus petit.

5. Bloc pour éléments de commutation selon l'une des revendications précédentes, caractérisé en ce
qu'au moins un conducteur électrique (9) est prévu à l'intérieur d'un module formant corps de base pour établir le contact électrique commun entre plusieurs éléments de commutation enfichables,
que chaque module formant corps de base, qui est équipé d'un tel conducteur électrique commun et peut être enfiché dans un logement à enfichage (2) d'un autre module formant corps de base, comprend une borne extérieure (6) pour le passage d'au moins un conducteur électrique commun (9) entre les modules, et
que le logement correspondant à enfichage (5) comporte une borne électrique à enfichage (10) comportant des moyens de couplage (11) pour loger ladite borne extérieure (8) et établir un contact électrique avec cette dernière.
